(19)

**Europäisches Patentamt**
**European Patent Office**
**Office européen des brevets**

(11) **EP 4 300 129 B1**

(12) **FASCICULE DE BREVET EUROPEEN**

(45) Date de publication et mention
de la délivrance du brevet:
**28.01.2026 Bulletin 2026/05**

(21) Numéro de dépôt: **23182015.0**

(22) Date de dépôt: **28.06.2023**

(51) Classification Internationale des Brevets (IPC):
**G01S 7/02** $^{(2006.01)}$        **G01S 7/48** $^{(2006.01)}$
**G01S 7/52** $^{(2006.01)}$

(52) Classification Coopérative des Brevets (CPC):
**G01S 7/021; G01S 7/4804; G01S 7/52001**

(54) **PROCÉDÉ DE REGROUPEMENT DE DESCRIPTIONS DE FORMES D'ONDES**

VERFAHREN ZUR GRUPPIERUNG VON WELLENFORMBESCHREIBUNGEN

METHOD FOR CLUSTERING WAVEFORM DESCRIPTIONS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **30.06.2022 FR 2206590**

(43) Date de publication de la demande:
**03.01.2024 Bulletin 2024/01**

(73) Titulaire: **THALES**
**92190 Meudon (FR)**

(72) Inventeurs:
• **BOURMAUD, Alexia**
**78852 ELANCOURT CEDEX (FR)**
• **ENDERLI, Cyrille**
**78851 ELANCOURT (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
• **MATUSZEWSKI JAN: "Application of Clustering
Methods in Radar Signals Recognition", 2018
INTERNATIONAL SCIENTIFIC-PRACTICAL
CONFERENCE PROBLEMS OF
INFOCOMMUNICATIONS. SCIENCE AND
TECHNOLOGY (PIC S&T), IEEE, 9 October 2018
(2018-10-09), pages 745 - 751, XP033512721,
ISBN: 978-1-5386-6609-8, [retrieved on
20190131], DOI: 10.1109/
INFOCOMMST.2018.8632057**

• **XU XIN ET AL: "Hierarchical Clustering of
Complex Symbolic Data and Application for
Emitter Identification", JOURNAL OF
COMPUTER SCIENCE AND TECHNOLOGY,
SPRINGER SINGAPORE, SINGAPORE, vol. 33,
no. 4, 13 July 2018 (2018-07-13), pages 807 - 822,
XP036546808, ISSN: 1000-9000, [retrieved on
20180713], DOI: 10.1007/S11390-018-1857-9**

• **DUDCZYK J: "Radar emission sources
identification based on hierarchical
agglomerative clustering for large data sets",
JOURNAL OF SENSORS, HINDAWI PUBLISHING
CORPORATION, US, vol. 2016, 1 January 2016
(2016-01-01), pages 1879327 - 1, XP009544696,
ISSN: 1687-725X, DOI: 10.1155/2016/1879327**

• **CURY A ET AL: "Application of symbolic data
analysis for structural modification
assessment", ENGINEERING STRUCTURES,
ELSEVIER, AMSTERDAM, NL, vol. 32, no. 3, 1
March 2010 (2010-03-01), pages 762 - 775,
XP026888539, ISSN: 0141-0296, [retrieved on
20100205], DOI: 10.1016/
J.ENGSTRUCT.2009.12.004**

Il est rappelé que: Dans un délai de neuf mois à compter de la publication de la mention de la délivrance du brevet
européen au Bulletin européen des brevets, toute personne peut faire opposition à ce brevet auprès de l'Office européen
des brevets, conformément au règlement d'exécution. L'opposition n'est réputée formée qu'après le paiement de la taxe
d'opposition. (Art. 99(1) Convention sur le brevet européen).

**Description**

Domaine technique :

La présente invention concerne le domaine de l'intelligence électronique et concerne plus particulièrement le regroupement de formes d'ondes, par exemple de formes d'ondes radars.

Technique antérieure :

Dans le domaine de l'intelligence électronique il est indispensable d'obtenir des informations sur l'adversaire. Associer un type d'émetteur radar à une forme d'onde est donc un enjeu crucial.

Pour permettre cette association, il est nécessaire de posséder une base de renseignement contenant des descriptions détaillées de toutes les formes d'ondes préalablement identifiées. Il est alors possible de comparer un signal détecté aux descriptions de cette base afin de l'associer à la forme d'onde dont il est le plus similaire.

Cette base de renseignement contient les descriptions de très nombreuses formes d'onde différentes. Il arrive que certaines descriptions soient quasiment identiques. En général, cela est dû au fait que certaines formes d'onde sont émises par le même radar mais avec des modes légèrement différents ou perçus comme tels par le dispositif d'écoute. Par ailleurs, certains modes sont très similaires et ne diffèrent que par des détails qui ne sont pas forcément reportés dans la description de la forme d'onde.

Ces descriptions quasiment identiques posent problème car elles entrainent des ambigüités lors de l'identification, et compliquent beaucoup le travail de l'opérateur qui renseigne les bases de données utilisées en opération à partir de la base de renseignement. En effet, certains signaux captés peuvent ainsi être associés à deux descriptions de la base de renseignement et donc à deux formes d'ondes différentes.

Il n'est pas envisageable de chercher ces descriptions manuellement, car ce serait une tâche beaucoup trop longue et fastidieuse compte tenu du nombre important de formes d'ondes dans la base de renseignement et de la complexité de leur description. Il est donc nécessaire de trouver un moyen automatique de réaliser cette détection.

La problématique de regroupement de données présentant des similarités a depuis longtemps été étudiée, voir par exemple J. Matuszewski, "Application of Clustering Methods in Radar Signals Recognition," 2018 International Scientific-Practical Conference Problems of Infocommunications. Science and Technology (PIC S&T), Kharkiv, Ukraine, 2018, pp. 745-751, doi: 10.1109/INFOCOMMST.2018.8632057. On parle de *clustering* en anglais, ce terme sera utilisé dans le reste de ce document.

Il existe de nombreux algorithmes de *clustering* ayant tous des caractéristiques leur conférant un avantage sur les autres dans un cas de figure spécifique. Parmi ces algorithmes, certains sont basés sur le regroupement de données proches au sens distance euclidienne, comme le *clustering* hiérarchique agglomératif (Kaufman & Rousseeuw, 1990), ou l'algorithme DBSCAN (Ester, Kriegel, Sander, & Xu, 1996).

Ces algorithmes ont d'abord été pensés pour travailler sur des données ayant des variables quantitatives. C'est-à-dire des variables soumises à une relation d'ordre, prenant une valeur numérique et pour lesquelles les opérations arithmétiques ont un sens. Cependant, les descriptions de formes d'ondes présentent d'autres types de variables, telles que des variables qualitatives, des intervalles, des histogrammes. Ces données sont dites symboliques. Des études cherchant à effectuer du *clustering* sur ce type de données ont été menées (Park, Choi, Delcher, Wang, & Yoon, 2019) (Cury, Crémona, & Diday, 2009) (Brito, 2014).

Cependant, dans toutes ces recherches, les algorithmes mis en place ont pour but à la fois de regrouper les données qui sont proches, de séparer les données qui sont très éloignées et surtout de créer des groupes les plus grands et homogènes possible. Pour le regroupement de descriptions de formes d'ondes, les deux derniers objectifs posent problème car ils risquent de regrouper des données qui sont considérées comme proches car très éloignées des autres, mais qui en réalité sont loin d'être identiques et donc qui ne proviennent pas du même radar par exemple.

L'invention vise à pallier certains problèmes précités. A cet effet, un objet de l'invention porte sur un procédé automatique de détection des descriptions quasiment identiques de la base de renseignement. La solution de l'invention s'appuie sur des techniques de *clustering* permettant de regrouper des données qui sont très similaires. Elle repose sur l'utilisation conjointe d'un calcul de distance entre deux descriptions et d'un algorithme de *clustering*. L'algorithme de *clustering* permet de regrouper les descriptions qui ont des valeurs de distance très faibles. La solution de l'invention présente l'avantage d'être automatisée et ainsi de ne nécessiter que très peu d'interventions humaines contrairement aux solutions de l'art antérieur. De plus elle permet le traitement de données symboliques composant les descriptions des formes d'ondes.

Résumé de l'invention :

A cet effet, un objet de l'invention est un procédé de regroupement de $N > 3$ descriptions $D_1, ..., D_N$ de formes d'ondes comprises dans une base de données, ledit procédé comprenant les étapes suivantes :

A. pour chaque description $D_i, i \in [1; N]$ de la base de données :

- calculer une distance $\Delta_{ik}$ sur données symboliques entre ladite description $D_i$ et chacune des $k$ autres descriptions $D_k$, avec $k \in [1; N]$, $k \neq i$,
- déterminer la description $D_j, i \neq j$, pour laquelle la distance $\Delta_{ij}$ est minimale, et former une paire $D_{ij}$ à partir des descriptions $D_i$ et $D_j$,

B. soit $Q \in \mathbb{N} > 2$, former $Q$ - 1 seuils $S_1, ..., S_{Q-1}$ tels que, pour $p$ allant de 1 à $Q$ - 1, la ou les p/Q-ième des paires $D_{ij}$ présentent chacune une distance $\Delta_{ij}$ inférieure au seuil $S_p$,
C. former Q ensembles, $C_1, ..., C_Q$, de paires $D_{ij}$ à partir des $Q$ - 1 seuils $S_1, ... , S_{Q-1}$
D. pour x allant de 1 à $Q$ : effectuer au moins une étape de fusion itérative regroupant les descriptions des paires $D_{ij}$ comprises dans l'ensemble $C_x$ en des groupes $G_x$ en fonction dudit seuil $S_x$, ladite au moins une étape de fusion itérative ne regroupant pas la ou les descriptions appartenant à un groupe $G_y$ formé à partir des ensembles $C_y$ avec y<x, de manière à obtenir des groupes $G_a$ ayant chacun une distance maximale $d_{max,x}$ entre deux descriptions qui sont différentes de celles des autres groupes $G_b$, $b \neq a$, un ensemble formé par tous les groupes obtenus étant dénommé partition de données.

Selon un mode de réalisation préféré, l'étape D comprend les sous étapes suivantes :

D1- pour x allant de 1 à $Q$ - 1, effectuer ladite au moins une étape de fusion itérative à partir desdites paires $D_{ij}$ comprises dans l'ensemble $C_x$ tant qu'une distance maximale $d_{max,x}$ entre deux descriptions des groupes $G_x$, formés dans une étape de fusion itérative précédente à partir desdites paires $D_{ij}$ comprises dans l'ensemble $C_x$, est inférieure au seuil $S_x$,
D2- pour x = $Q$, effectuer ladite au moins une étape de fusion itérative de sorte que chaque groupe $G_Q$ formés par ladite au moins une étape de fusion itérative regroupe les descriptions des paires $D_{ij}$ comprises dans l'ensemble $C_Q$ qui présentent une description en commun.

Selon un mode de réalisation préféré, l'étape C de formation des $Q$ ensembles, $C_1, ..., C_Q$, de paires $D_{ij}$ est telle que :

- ledit ensemble $C_1$ comprend la ou les paires $D_{ij}$ présentant une distance $\Delta_{ij}$ inférieure au seuil $S_1$
- pour $x$ allant de 2 à $Q$ - 1, ledit ensemble $C_x$ comprend la ou les paires $D_{ij}$ présentant chacune une distance $\Delta_{ij}$ inférieure au seuil $S_x$ mais supérieure ou égale au seuil $S_{x-1}$
- ledit ensemble $C_Q$ comprend la ou les paires $D_{ij}$ présentant chacune une distance $\Delta_{ij}$ supérieure ou égale au seuil $S_{Q-1}$

Selon un mode de réalisation préféré, le procédé comprend une étape ultérieure E consistant à ordonner les groupes obtenus suite à l'étape D de celui qui possède la plus petite distance maximale entre deux descriptions du groupe à celui qui possède la plus grande distance maximale entre deux descriptions du groupe.
Selon un mode de réalisation préféré, calcul de distance sur données symboliques comprend :

A1- le calcul d'une première distance entre au moins une variable quantitative de chaque description, et/ou
A2- le calcul d'une deuxième distance entre au moins une variable correspondant à des bornes d'intervalle de chaque description

De manière préférentielle, dans le précédent mode de réalisation, le calcul de distance sur données symboliques est effectué par une étape A2' d'addition de la première et de la deuxième distance.
Selon un mode de réalisation préféré, noté MP, l'étape de calcul de distance sur données symboliques comprend en outre :

A3- le calcul d'une troisième distance entre au moins une variable de type histogramme de chaque description, et/ou
A4- le calcul d'une quatrième distance entre au moins une variable qualitative de chaque description, ladite au moins une variable qualitative comprenant par exemple un type de modulation de fréquence.

De manière préférentielle, dans le mode de réalisation MP, le calcul de distance sur données symboliques est obtenu par une sous étape A4' d'addition de la première, de la deuxième, de la troisième et de la quatrième distance.

Alternativement, selon une variante notée VP du mode de réalisation MP, le calcul de distance sur données symboliques est obtenu par une sous étape A4' d'addition de la première, de la deuxième, de la troisième et de la quatrième distance, avec une pondération de chaque distance.

De manière préférentielle, dans la variante VP, les étapes B à D sont répétées une pluralité de fois en variant la valeur Q entre chaque itération jusqu'à trouver la valeur de $Q$ qui minimise une moyenne des distances maximales entre deux descriptions d'un sous ensemble des groupes ou une médiane des distances maximales entre deux descriptions des groupes.

Alternativement, dans la variante VP, les étapes B à D sont répétées une pluralité de fois en variant la valeur Q entre chaque itération jusqu'à trouver la valeur de Q adaptée pour minimiser un nombre de groupes et une médiane des distances maximales entre deux descriptions des groupes.

De manière préférentielle, dans le mode de réalisation MP, le calcul de la quatrième distance entre au moins une variable qualitative de chaque description, notées x1 et *x2* est défini par l'équation suivante :

$$d(x1, x2) = \begin{cases} 0 \ si \ x1 \ est \ identique \ à \ x2 \\ n \ si \ x1 \ est \ différent \ de \ x2 \end{cases}$$ avec *n* > 0 un nombre entier adapté en fonction du poids relatif des variables qualitatives par rapport aux autres types de variable.

Selon un mode de réalisation préféré, le procédé comprend en outre les étapes suivantes :

- répéter les étapes B à D un nombre L $\geq$ 2 de fois en variant la valeur Q et/ou en variant ladite pondération des distances entre chaque itération de manière à obtenir L partitions de données différentes, et
- appliquer un algorithme de clustering hiérarchique agglomératif à partir des L partitions de données différentes afin de former une partition de données finale plus robuste au bruit.

De manière préférentielle, l'étape G comprend les sous étapes suivantes :

G-i - Former une matrice C de dimension N $\times$ *N* de coefficients $C_{ij}$ représentatif d'une distance de regroupement d'une des descriptions $D_i$ et d'une autre des descriptions $D_j$ dans les *L* partitions de données différentes,
G-ii - Appliquer ledit algorithme de *clustering* hiérarchique agglomératif sur les descriptions $D_1$, ..., $D_N$ en fonction desdites distances de regroupement afin de créer une pluralité de partitions agglomérées correspondant chacune à une itération différente dudit algorithme,
G-iii - Calculer une durée de vie de chacune des partitions agglomérées, ladite durée de vie d'une partition agglomérée donnée étant définie comme une différence entre :

- une distance de regroupement maximale entre deux descriptions de ladite partition agglomérée donnée et
- une distance de regroupement maximale entre deux descriptions d'une partition agglomérée obtenue par une itération supplémentaire dudit algorithme sur ladite partition agglomérée donnée

G-iv - Sélectionner la partition agglomérée présentant la durée de vie maximale, qui forme ladite partition de données finale plus robuste au bruit.

De manière préférentielle, $C_{ij} = 1 - \frac{m_{ij}}{L}$, où $m_{ij}$ est un nombre de fois où la description $D_i$ et la description $D_j$ sont regroupées dans un même groupe parmi les L partitions de données différentes.

Brève description des figures :

D'autres caractéristiques, détails et avantages de l'invention ressortiront à la lecture de la description faite en référence aux dessins annexés donnés à titre d'exemple et qui représentent, respectivement :

[Fig.1], une vue schématique du procédé de regroupement de descriptions de formes d'ondes de l'invention,
[Fig.2A], une comparaison par illustration simplifiée de groupes de descriptions obtenus par des procédés *clustering* hiérarchique agglomératif de l'art antérieur (à gauche) et par le procédé de l'invention (à droite),
[Fig.2B], une vue schématique d'un exemple de groupes de descriptions obtenus par le procédé de l'invention,
[Fig.3], une vue schématique du procédé de regroupement de descriptions de formes d'ondes selon un mode de réalisation préféré de l'invention,
[Fig.4], une vue schématique du procédé de regroupement de descriptions de formes d'ondes selon un mode de réalisation préféré de l'invention,
[Fig.5A] à [Fig.5D], une vue schématique d'une étape G de clustering hiérarchique agglomératif sur des partitions de données du procédé de regroupement de descriptions de formes d'ondes de la figure 4,

Dans les figures, sauf contre-indication, les éléments ne sont pas à l'échelle.

Description détaillée :

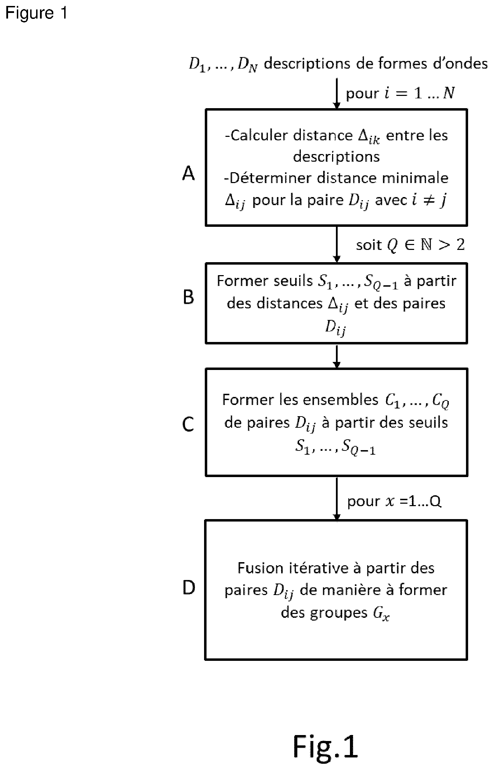

La figure 1 illustre une vue schématique du procédé de regroupement de descriptions de formes d'ondes de l'invention. On suppose ici qu'une base de données de formes d'ondes préalablement identifiées comprend $N > 3$ descriptions $D_1, ...,D_N$ de formes d'ondes. A titre d'exemple non limitatif, ces formes d'ondes sont des formes d'ondes radar, sonar ou encore lidar. Le procédé de l'invention sera mise en œuvre à partir de ces descriptions $D_1, ..., D_N$ de formes d'ondes.

Comme évoqué précédemment, les descriptions de formes d'ondes $D_1, ..., D_N$ sont des données dites symboliques car elles comprennent des variables non quantitatives et/ou des variables qui ne sont pas soumises à une relation d'ordre entre elles.

Selon un mode de réalisation, les descriptions comprennent au moins une variable qualitative représentative d'un paramètre de la forme d'onde détecté choisi parmi la liste suivante : la valeur de fréquence, le nombre de valeurs de fréquence différentes, le nombre de valeurs de largeur d'impulsion différentes, la valeur d'agilité de fréquence, le nombre de valeurs de répétition.

Selon un mode de réalisation, compatible avec le mode de réalisation précédent, les descriptions comprennent au moins une variable correspondant à des bornes d'intervalle de paramètres de chaque description choisi parmi la liste suivante : un intervalle de fréquence, un intervalle de largeur d'impulsion, un intervalle de période de répétition des impulsions, un intervalle d'excursion des modulations intra pulse.

Selon un mode de réalisation, compatible avec les deux modes de réalisation précédents, les descriptions comprennent au moins une variable de type histogramme correspondant à un paramètre de chaque description choisi parmi la liste suivante : des moments de fréquence de la forme d'onde, des moments de largeur d'impulsions de la forme d'onde, des moments de période de répétition des impulsions de la forme d'onde, des moments de période de répétition du motif de la forme d'onde.

Selon un mode de réalisation, compatible avec les trois modes de réalisation précédents, les descriptions comprennent au moins une variable de type qualitative correspondant à un paramètre de chaque description choisi parmi la liste suivante : un type de modulation de fréquence de la forme d'onde, un type de modulation de la période de répétition des impulsions, un type de balayage, un type de modulation intra pulse.

Il est entendu que ces listes ne sont pas exhaustives. L'homme de l'art est à même de choisir des paramètres des formes d'ondes autres que ceux précédemment évoqués sans sortir du cadre de l'invention.

La première étape A du procédé de l'invention, mise en œuvre pour chaque description $D_i$ de la base de données avec $i$ allant de 1 à $N$, consiste à calculer une distance $\Delta_{ik}$ sur données symboliques entre la description $D_i$ et chacune des $k$ autres descriptions $D_k, k \neq i$. Différentes mises en œuvre calcul de distance sur données symboliques seront décrites plus loin.

De plus, dans l'étape A, pour chaque description $D_i$, on détermine la description $D_j, i \neq j$, pour laquelle la distance $\Delta_{ij}$ est minimale une fois les distances $\Delta_{ik}$ calculées. C'est-à-dire qu'on détermine la description $D_j, i = j$ pour laquelle la distance $\Delta_{ij}$ est la plus petite des distances $\Delta_{ik}$, $k \in [1; N]$, $k \neq i$. On forme alors une paire de description $D_{ij}$ à partir des descriptions $D_i$ et $D_j$.

A la suite de l'étape A, le procédé de l'invention comprend une étape B consistant à former $Q - 1$ seuils $S_1, ...,S_{Q-1}$ définis de sorte que chaque seuil permette de séparer les paires $D_{ij}$ de descriptions par quantile, selon leur distance $\Delta_{ij}$. Autrement dit, les seuils $S_1, ...,S_{Q-1}$ sont tels que, pour $p$ allant de 1 à $Q - 1$, la ou les $p/Q$-ième des paires $D_{ij}$ présentent chacune une distance $\Delta_{ij}$ inférieure au seuil $S_p$.

Ici $Q$ est un nombre entier sélectionné par la personne mettant en œuvre le procédé, afin de paramétrer le nombre de *clusters* formés à la fin du procédé de l'invention. En effet, un $Q$ élevé entrainera un nombre élevé de *clusters* formés, ce qui peut être souhaitable ou non en fonction des applications, du nombre $N$ de descriptions et du type de données. On note cependant que, bien que $Q$ a une influence sur le nombre de clusters formés, $Q$ n'est pas égal à ce dernier.

Après, dans une étape C, on forme $Q$ ensembles, $C_1, ..., C_Q$, de paires $D_{ij}$ à partir des seuils $S_1,..., S_{Q-1}$ de sorte que les paires $D_{ij}$ soient réparties dans les quantiles définis par les seuils. Ainsi, l'ensemble $C_1$ comprend la ou les paires $D_{ij}$ présentant une distance $\Delta_{ij}$ inférieure au seuil $S_1$. De plus, pour x allant de 2 à $Q - 1$, chaque ensemble $C_x$ comprend la ou les paires $D_{ij}$ présentant chacune une distance $\Delta_{ij}$ respective inférieure au seuil $S_x$ mais supérieure ou égale au seuil $S_{x-1}$. Enfin, l'ensemble $C_Q$ comprend la ou les paires $D_{ij}$ présentant chacune une distance $\Delta_{ij}$ respective supérieure ou égale au seuil $S_{Q-1}$.

A la suite de l'étape C, on a donc réparti les paires de descriptions par quantiles. Il est à présent nécessaire d'effectuer des étapes de fusion itérative (ou *clustering* hiérarchique agglomératif) afin de créer des groupes (ou *clusters*) de données pertinents avec des descriptions semblables.

Pour cela, dans une étape D mise en œuvre pour $x$ allant de 1 à $Q$, on effectue au moins une étape de fusion itérative regroupant les descriptions des paires $D_{ij}$ comprises dans l'ensemble $C_x$ en des groupes $G_x$ en fonction du seuil $S_x$ précédemment défini en étape B, de manière à obtenir des groupes $G_a$ ayant chacun une distance maximale $d_{max,a}$ entre deux descriptions qui sont différentes de celles des autres groupes $G_b$, $b \neq a$. Pour cela, il est essentiel que, pour chaque $x$, la ou les étapes de fusion itérative ne regroupent pas la ou les descriptions appartenant à un groupe $G_y$, avec $y < x$, précédemment formé à partir des ensembles $C_y$.

Plus précisément, de manière préférentielle, l'étape D de fusion itérative comprend une première sous étape D1 effectuée pour $x$ allant de 1 à $Q$ - 1 et consistant à effectuer la ou les fusions itératives à partir des paires $D_{ij}$ comprises dans l'ensemble $C_x$ tant que la distance maximale $d_{max,x}$ entre deux descriptions des groupes formés dans une étape de fusion itérative précédente est inférieure au seuil $S_x$. Pour la première itération de fusion, les groupes sont les paires de l'ensemble $C_x$ considéré, obtenues précédemment dans l'étape C. Pour clarification, par « des groupes formés dans une étape de fusion itérative précédente », on entend les groupes précédemment formés par fusion à partir des paires dans l'ensemble $C_x$ considéré. L'étape D1 consiste donc, pour chaque $x$, à fixer le seuil $S_x$ comme seuil de distance maximale $d_{max,x}$ permettant de stopper de la fusion.

Enfin, l'étape D comprend une deuxième sous étape D2, mise en œuvre pour $x = Q$, consistant à effectuer la ou les étapes de fusions itératives de sorte que chaque groupe $G_Q$ formés regroupe les descriptions des paires $D_{ij}$ comprises dans l'ensemble $C_Q$ qui présentent une description en commun. Il s'agit donc simplement ici d'identifier les descriptions les moins similaires mais tout de même semblables et de les regrouper.

On appelle « partition de données » un ensemble formé par les groupes obtenus à l'issue de l'étape D.

Ainsi, le procédé de l'invention permet le regroupement de données quasiment identiques au sein de mêmes groupes (ou *clusters).* Contrairement, à un algorithme de *clustering* hiérarchique agglomératif, le procédé de l'invention ne nécessite pas de connaitre à l'avance le nombre de groupes recherchés.

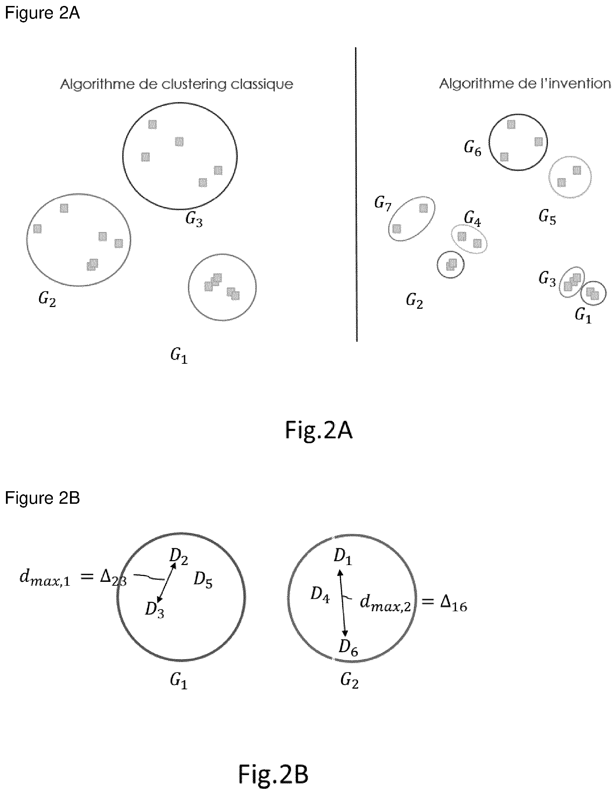

La figure 2A est une illustration comparant des groupes de descriptions obtenus par un procédé de *clustering* hiérarchique agglomératif de l'art antérieur (à gauche) et par le procédé de l'invention (à droite). Les descriptions sont représentées par des carrés alors que les cercles et ellipses entourant ces carrés représentent les différents groupes formés par chaque procédé. Le procédé de l'invention a l'avantage de hiérarchiser son processus de *clustering,* afin de créer dans un premier temps des groupes ne contenant que des données quasiment identiques (par exemple groupes $G_1$, $G_2, G_3$), puis dans un second temps des groupes contenant des données proches, mais pas identique (par exemple groupes $G_4$, $G_5$), puis enfin des groupes avec des données présentant des similarités, mais loin d'être identiques (par exemple groupes $G_6$, $G_7$),.

En séparant les paires de description par quantile en étape B et C de manière à former des ensembles de paires $C_1$, ..., $C_Q$ puis en appliquant une étape de fusion itérative sur chacun de ces ensembles séparément (en étape D), le procédé de l'invention évite le problème des algorithmes de *clustering* conventionnels qui rassemblent au sein d'un même groupe des données quasiment identiques mais également des données semblables (voir groupes $G_2$, $G_3$ à gauche), ce qui rendrait nettement plus difficile la détection de données quasiment identiques.

Le procédé de l'invention a entre autre l'avantage d'être entièrement automatisé.

La figure 2B illustre une vue schématique d'un exemple de groupes $G_1$, $G_2$ de descriptions obtenus par le procédé de l'invention pour $N = 6$ descriptions $D_1 ... D_6$. Sur la figure 2B est représentée la distance maximale entre deux descriptions, notées $d_{max,1}$ et $d_{max,2}$ pour le groupe $G_1$ et $G_2$ respectivement.

Le mode de calcul de distance sur données symboliques dépend des types de variables que comprennent les descriptions.

Selon un premier mode de réalisation, les descriptions comprennent chacune au moins une variable quantitative (par exemple la valeur de fréquence de la forme d'onde) et au moins une variable correspondant à des bornes d'intervalle (par exemple un intervalle de fréquences de la forme d'onde). Dans ce premier mode de réalisation, le calcul de distance est effectué par :

- le calcul d'une première distance entre la ou les variables quantitatives de chaque description
- le calcul d'une deuxième distance entre la ou les variables correspondant à des bornes d'intervalle de chaque description
- l'addition de la première et de la deuxième distance.

A titre d'exemple non limitatif, le calcul de la première distance est un calcul de distance euclidienne, de distance de Manhattan, de distance Minkowski, ou encore de distance de Chebyshev.

A titre d'exemple non limitatif, le calcul de la deuxième distance $d_2$ entre deux données composées d'intervalles *donnée1* et *donnée2* est effectuée de la manière suivante :

$$d_2(donnée1, donnée2)$$

$$= \sqrt{\sum_{intervalles} \max(|bInf_{donnée1} - bInf_{donnée2}|, |bSup_{donnée1} - bSup_{donnée2}|)^2}$$

avec $bInf_{donnée1}$, $bInf_{donnée2}$ la borne inférieure des intervalles de *donnée1* et *donnée2* respectivement et avec $bSup_{donnée1}$, $bSup_{donnée2}$ la borne supérieure des intervalles de *donnée1* et *donnée2* respectivement.

Il est entendu que l'homme de l'art est à même d'utiliser d'autres méthodes de calcul de distance sur données d'intervalles connues de l'art pour le calcul de la première et la deuxième distance.

Selon un deuxième mode de réalisation, les descriptions comprennent chacune au moins une variable quantitative (par exemple la valeur de fréquence de la forme d'onde), au moins une variable correspondant à des bornes d'intervalle (par exemple un intervalle de fréquences de la forme d'onde), au moins une variable de type histogramme (par exemple des moments de fréquence de la forme d'onde) et au moins une variable qualitative (par exemple un type de modulation de fréquence de la forme d'onde).

Dans ce deuxième mode de réalisation, le calcul de distance est effectué par :

- le calcul d'une première distance entre la ou les variables quantitatives de chaque description,
- le calcul d'une deuxième distance entre entre la ou les variables correspondant à des bornes d'intervalle de chaque description,
- le calcul d'une troisième distance entre la ou les variables de type histogramme de chaque description,
- le calcul d'une quatrième distance entre la ou les variables qualitatives de chaque description,
- l'addition de la première, de la deuxième, de la troisième et de la quatrième distance.

A titre d'exemple non limitatif, le calcul de la troisième distance $d_3$ entre deux données *donnée1* et *donnée2* chacune composée d'un histogramme est un calcul de distance $\chi^2$, c'est-à-dire obtenu par :

$$d_3(donnée1, donnée2) = \sum_{i=1}^{N} \frac{(i_{donnée1} - i_{donnée2})^2}{i_{donnée1} + i_{donnée2}}$$

avec $i_{donnée1}$, $i_{donnée2}$ les valeurs de l'histogramme de la *donnée1* et de la *donnée2* respectivement, et avec N le nombre de valeur dans les deux histogrammes.

A titre d'exemple non limitatif, le calcul de la quatrième distance $d_4$ entre deux données, notées x1 et x2 est effectué par l'équation suivante :

$$d_4(x1, x2) = \begin{cases} 0 \ si \ x1 \ est \ identique \ à \ x2 \\ n \ si \ x1 \ est \ différent \ de \ x2 \end{cases}$$

Ici, n est un nombre entier non nul adapté en fonction du poids relatif des variables qualitatives par rapport aux autres types de variable. Ce paramètre est ajusté par l'utilisateur du procédé. Par exemple, n est plus grand qu'un minimum de la somme de la première distance, de la deuxième distance et de la troisième distance calculées entre toutes les descriptions de la base de données. Ainsi, on assure un point non négligeable aux variables quantitatives.

Dans une première variante du deuxième mode de réalisation, le calcul de distance est effectué par une addition de la première, de la deuxième, de la troisième et de la quatrième distance, avec une pondération de chaque distance. Cette pondération est choisie par l'utilisateur en fonction de la pertinence d'un type de distance pour cette description, cette pertinence étant par exemple déterminé par un expert de ce type de données ou par la connaissance d'une défaillance ponctuelle dans la mesure d'une des variables comprises dans les descriptions.

Dans une deuxième variante du deuxième mode de réalisation, les étapes B à D sont répétées une pluralité de fois en variant la valeur de Q entre chaque itération jusqu'à trouver la valeur de Q qui minimise une moyenne des distances maximales $d_{max,x}$ d'un sous ensemble des groupes ou une médiane des distances maximales $d_{max,x}$ des groupes. Ainsi, on trouve le nombre de quantile pour lequel la partition est formée de groupes regroupant les descriptions les plus semblables possibles. De manière préférentielle, le sous ensemble des groupes sur lequel est calculé la moyenne des distances maximales $d_{max,x}$ est formé des groupes $G_1$ à $G_p$ avec p inférieur au nombre total Z de groupes afin de ne pas être biaisé par les distances maximales $d_{max,x}$ des groupes formés des descriptions les moins semblables (notamment le ou les groupes $G_Q$). Pour cela, $p$ est par exemple choisi tel que $p = \dfrac{Z}{4}$.

Dans une troisième variante du deuxième mode de réalisation, les étapes B à D sont répétées une pluralité de fois en variant la valeur $Q$ entre chaque itération jusqu'à trouver la valeur de $Q$ adaptée pour minimiser un nombre de groupes et une médiane des distances maximales $d_{max,x}$ des groupes. Cette variante est similaire à la deuxième variante mais le nombre de quantile est aussi adapté pour minimiser le nombre de groupe. Cette troisième variante permet d'éviter un découpage des groupes trop fin et ainsi obtenir un nombre très élevés de groupes regroupant peu de descriptions (par exemple deux ou trois), ce qui irait à l'encontre de l'objectif de regroupement du procédé de l'invention.

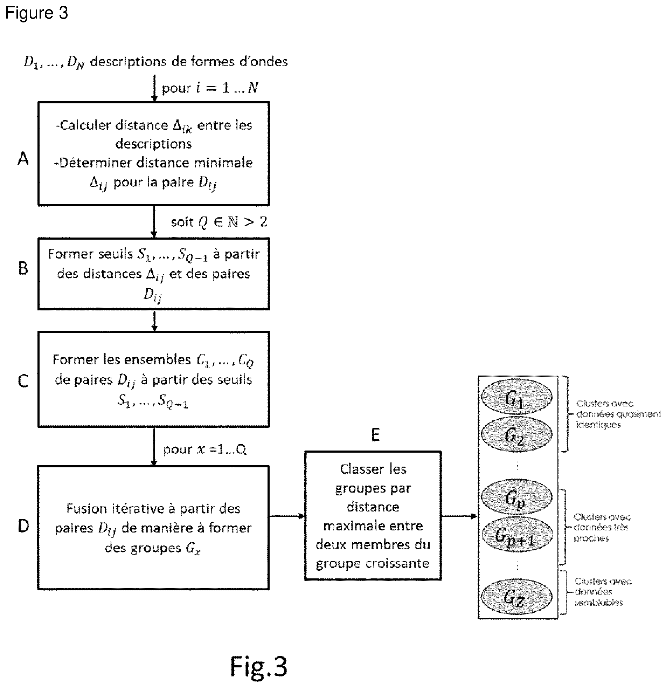

La figure 3 illustre un mode de réalisation préféré dans lequel le procédé de l'invention comprend une étape ultérieure E consistant à classer les groupes obtenus en étape F par distance $d_{max,x}$ croissante. Ainsi, après l'étape F, les premiers groupes regroupent les descriptions de forme d'onde quasiment identiques alors que les autres groupes indiquent des regroupements de formes d'onde de moins en moins similaires lorsque leur distance $d_{max,x}$ augmente. Les groupes de descriptions ordonnés sont donc plus facilement manipulables pour des utilisateurs et plus pertinent pour le regroupement par proximité de formes d'ondes.

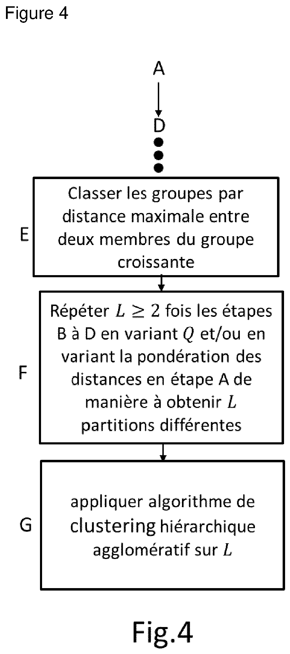

La figure 4 illustre un mode de réalisation préféré du procédé de la figure 3, dans lequel le procédé comprend deux étapes ultérieures F et G.

Dans le mode de réalisation de la figure 4, le calcul de distance est effectué par l'addition de plusieurs des distances parmi la première, la deuxième, la troisième et la quatrième distance, avec une pondération de chaque distance (comme dans la première variante du deuxième mode de réalisation par exemple).

Après l'étape E, l'étape F du procédé de la figure 4 consiste à répéter les étapes B à D un nombre $L \geq 2$ de fois en variant la valeur $Q$ et/ou en variant la pondération des distances entre chaque itération. Ainsi, à la suite de l'étape F, on obtient $L$ partitions de données différentes chacune formée de groupes $G_x$ différents des autres partitions.

A la suite de l'étape F, l'étape G du procédé de la figure 4 consiste à appliquer un algorithme de clustering hiérarchique agglomératif à partir des $L$ partitions de données différentes. Ainsi, le procédé de la figure 4 permet de générer une partition de données finale plus robuste au bruit.

L'algorithme de clustering hiérarchique agglomératif de l'étape G peut être tout algorithme connu de l'homme de l'art. Selon un mode de réalisation, l'algorithme de l'étape G est de type *clustering* hiérarchique ascendant ou bien descendant.

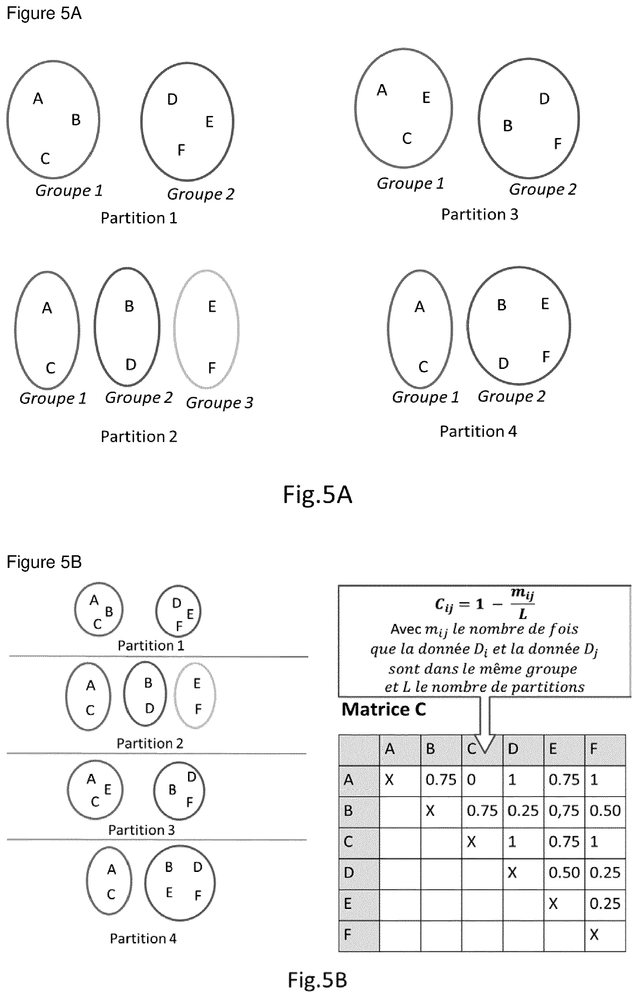

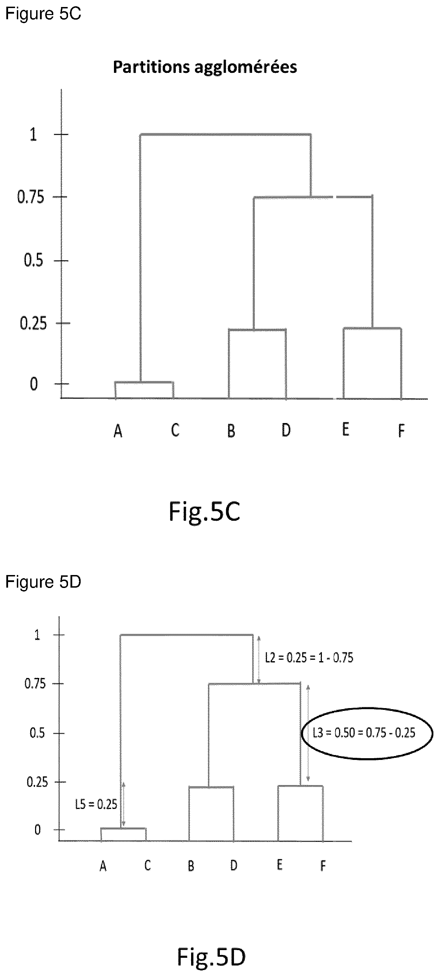

Les figures 5A à 5D illustrent schématiquement les différentes sous étapes G-i à G-iv d'une mise en œuvre préférée de l'étape G du procédé de la figure 4.

La figure 5A illustre schématiquement $L$ partitions différentes obtenues par $L$ itérations de l'algorithme de l'invention chacune effectuée avec des paramètres différents (valeur de $Q$ différente ou pondération des distances différente). Les $L$ partitions comprennent un nombre de groupes différent et/ou comprennent des groupes formés de descriptions différentes.

A titre d'exemple non limitatif, les figures 5A et 5B sont décrites pour $L = 4$ et pour $N = 6$ descriptions différentes notées de A à F. Selon un autre mode de réalisation, $L$ est différent de 4 et $N$ est différent de 6.

La figure 5B illustre la première sous étape G-i de l'étape G dans laquelle on forme une matrice C de dimension $N \times N$ de coefficients $C_{ij}$ chacun représentatif d'une distance de regroupement d'une des descriptions $D_i$ et d'une autre des descriptions $D_j$ dans les $L$ partitions de données différentes. Cette distance de regroupement caractérise si les deux descriptions $D_i$ et $D_j$ sont fréquemment regroupées ou non au sein d'un même groupe dans les $L$ partitions de données différentes.

Préférentiellement, comme illustré dans la figure 5B, $C_{ij} = 1 - \dfrac{m_{ij}}{L}$, où $m_{ij}$ est un nombre de fois où la description $D_i$ et la description $D_j$ sont regroupées dans un même groupe parmi les L partitions de données différentes. Ainsi, lorsque $C_{ij} = 0$, alors les descriptions $D_i$ et $D_j$ sont regroupées dans un même groupe dans chacune des $L$ partitions. A l'inverse, lorsque $C_{ij} = 1$, les descriptions $D_i$ et $D_j$ ne sont jamais regroupées dans un même groupe au sein des $L$ partitions.

Dans la deuxième sous étape G-ii, on applique l'algorithme de *clustering* hiérarchique agglomératif sur les descriptions $D_1$, ..., $D_N$ en fonction des distances de regroupement afin de créer une pluralité de partitions agglomérées correspondant chacune à une itération différente de l'algorithme.

La figure 5C illustre, sous la forme de dendrogramme, les différentes configurations de partitions agglomérées obtenues pour l'exemple de la figure 5A. Dans l'exemple de la figure 5C, l'étape G-ii forme d'abord une première partition agglomérée dénommée $L_5$ comprenant un premier groupe regroupant les descriptions A et C (car $C_{AC} = 0$) et comprenant 4 autres groupes chacun formé d'une des descriptions B à F. Cette partition $L_5$ comprend donc 5 groupes : A-C ; B ; D ; E ; F.

Dans une deuxième itération de l'algorithme de *clustering,* appliquée sur la partition agglomérée $L_5$, l'étape G-ii forme alors une deuxième partition agglomérée dénommée $L_3$ comprenant toujours le premier groupe regroupant les descriptions A et C et comprenant un deuxième groupe regroupant les descriptions B et D. Enfin, le troisième groupe de la deuxième partition agglomérée contient les descriptions E et F. En effet, il n'est plus possible de former le groupe D-F car la description D est regroupée avec la description B dans le deuxième groupe et car un groupe B-D-F aurait une distance de regroupement maximale (distance entre la description F et la description B) qui vaut 0.75 et donc supérieure à la distance de regroupement du groupe E-F (qui vaut 0.25).

On note que, dans l'exemple choisi, il y a le choix entre B-D, D-F et E-F pour la formation du deuxième groupe car tous ces groupes ont une distance de regroupement qui vaut 0.25. On a donc en choisit le deuxième groupe B-D de façon aléatoire.

Dans une troisième itération de l'algorithme, appliquée sur la partition agglomérée $L_3$, l'étape G-ii forme alors une troisième partition agglomérée $L_2$ contenant toujours le premier groupe formé des descriptions A et C et un deuxième groupe formé cette fois-ci des descriptions B-D-E-F. En effet, la distance maximale au sein du deuxième groupe est de 0.75, alors que si on avait regroupé A-C avec BD ou avec E-F, la distance maximale au sein du deuxième groupe aurait été de 1. La troisième itération a donc fusionné le deuxième et le troisième groupe de la partition $L_3$ obtenue par la deuxième itération.

Une fois les partitions agglomérées formées, il est nécessaire de sélectionner la partition agglomérée la plus robuste au bruit.

Pour cela, dans une troisième sous-étape G-iii, on calcule une durée de vie de chacune des partitions agglomérées. Par « durée de vie d'une partition agglomérée », on entend ici la différence entre :

- une distance de regroupement maximale entre deux descriptions de la partition agglomérée et
- une distance de regroupement maximale entre deux descriptions d'une partition agglomérée obtenue par une itération supplémentaire de l'algorithme, à partir de la partition agglomérée donnée.

Dans une dernière sous étape G-iv, on sélectionne la partition agglomérée présentant la durée de vie maximale. Cette partition forme la partition de données finale plus robuste au bruit précédemment mentionnée. Autrement dit, les sous étapes G-iii et G-iv consistent à trouver le seuil de distance de regroupement (ici compris entre 0 et 1 de par la formulation de $C_{ij}$) qui permet de stopper au mieux la fusion des groupes.

Dans l'exemple des figure 5A-5D, en choisissant un seuil égal à 0.1, seul les groupes ayant des distances de regroupement plus petite que 0,1 pourront être crées. Donc seul le groupe A-C sera crée. À l'inverse, en choisissant un seuil égal à 0,8 seul les groupes ayant des distances de regroupement plus petite que 0,1 pourront être crées. Ainsi, le groupe A-C et le groupe B-D-E-F pourra être crée.

La durée de vie de la partition agglomérée $L_5$ comprenant 5 groupes : (A-C ; B ; D ; E et F) est de 0,25 car la distance de regroupement maximale de la partition $L_5$ (celle du groupe A-C) vaut 0 et la distance de regroupement maximale de la partition $L_3$ (du groupe B-D) vaut 0.25. Autrement dit, le seuil de distance doit augmenter de 0,25 avant qu'un autre groupe soit crée (groupe B-D-E-F).

La durée de vie de la partition agglomérée $L_3$ comprenant 3 groupes : (A-C, B-D, E-F) est de 0,50 car la distance de regroupement maximale de la partition $L_3$ (du groupe B-D ou du groupe E-F) vaut 0.25 et la distance de regroupement maximale de la partition $L_2$ (du groupe B-D-E-F, donnée par la distance entre B et E) vaut 0.75. Autrement dit, le seuil de distance doit augmenter de 0,5 avant qu'un autre groupe soit crée (groupe B-D-E-F).

Enfin, la durée de vie de la partition agglomérée $L_2$ comprenant 2 groupes : (A-C, B-D-E-F) est égale à 0,25 car le seuil de distance doit augmenter de 0,25 avant qu'un autre groupe soit crée (groupe A-C-B-D-E-F).

On choisit de stopper la fusion dans la configuration la plus « stable », c'est-à-dire celle qui donne une partition agglomérée avec la plus grande durée de vie. Il s'agit ici de la configuration $L_3$.

**Revendications**

**1.** Procédé de regroupement de $N > 3$ descriptions $D_1,..., D_N$ de formes d'ondes comprises dans une base de données, ledit procédé comprenant les étapes suivantes :

0. sélectionner les $N > 3$ descriptions $D_1, ..., D_N$ de formes d'ondes comprises dans la base de données,
A. pour chaque description $D_i$, $i \in [1; N]$ de la base de données :

- calculer une distance $\Delta_{ik}$ sur données symboliques entre ladite description $D_i$ et chacune des $k$ autres descriptions $D_k$, avec $k \in [1; N]$, $k \neq i$,
- déterminer la description $D_j$, $i \neq j$, pour laquelle la distance $\Delta_{ij}$ est minimale, et former une paire $D_{ij}$ à partir des descriptions $D_i$ et $D_j$,

B. soit $Q \in \mathbb{N} > 2$, former $Q$ - 1 seuils $S_1, ...,S_{Q-1}$ tels que, pour p allant de 1 à $Q$ - 1, la ou les p/Q-ième des paires $D_{ij}$ présentent chacune une distance $\Delta_{ij}$ inférieure au seuil $S_p$,

C. former Q ensembles, $C_1,...,C_Q$, de paires $D_{ij}$ à partir des $Q - 1$ seuils $S_1,...,S_{Q-1}$

D. pour x allant de 1 à $Q$ : effectuer au moins une étape de fusion itérative regroupant les descriptions des paires $D_{ij}$ comprises dans l'ensemble $C_x$ en des groupes $G_x$ en fonction dudit seuil $S_x$, ladite au moins une étape de fusion itérative ne regroupant pas la ou les descriptions appartenant à un groupe $G_y$ formé à partir des ensembles $C_y$ avec y<x, de manière à obtenir des groupes $G_a$ ayant chacun une distance maximale $d_{max,x}$ entre deux descriptions qui sont différentes de celles des autres groupes $G_b$, $b \neq a$, un ensemble formé par tous les groupes obtenus étant dénommé partition de données

00. présenter ladite partition de données dans laquelle les $N > 3$ descriptions $D_1,...,D_N$ sont regroupées.

2. Procédé selon la revendication précédente, dans laquelle l'étape D comprend les sous étapes suivantes :

D1- pour x allant de 1 à $Q - 1$, effectuer ladite au moins une étape de fusion itérative à partir desdites paires $D_{ij}$ comprises dans l'ensemble $C_x$ tant qu'une distance maximale $d_{max,x}$ entre deux descriptions des groupes $G_x$, formés dans une étape de fusion itérative précédente à partir desdites paires $D_{ij}$ comprises dans l'ensemble $C_x$, est inférieure au seuil $S_x$,

D2- pour x = $Q$, effectuer ladite au moins une étape de fusion itérative de sorte que chaque groupe $G_Q$ formés par ladite au moins une étape de fusion itérative regroupe les descriptions des paires $D_{ij}$ comprises dans l'ensemble $C_Q$ qui présentent une description en commun.

3. Procédé selon la revendication 1 ou 2, dans lequel l'étape C de formation des Q ensembles, $C_1, ..., C_Q$, de paires $D_{ij}$ est telle que :

- ledit ensemble $C_1$ comprend la ou les paires $D_{ij}$ présentant une distance $\Delta_{ij}$ inférieure au seuil $S_1$
- pour x allant de 2 à $Q - 1$, ledit ensemble $C_x$ comprend la ou les paires $D_{ij}$ présentant chacune une distance $\Delta_{ij}$ inférieure au seuil $S_x$ mais supérieure ou égale au seuil $S_{x-1}$
- ledit ensemble $C_Q$ comprend la ou les paires $D_{ij}$ présentant chacune une distance $\Delta_{ij}$ supérieure ou égale au seuil $S_{Q-1}$

4. Procédé selon l'une quelconque des revendications précédente, comprenant une étape ultérieure E consistant à ordonner les groupes obtenus suite à l'étape D de celui qui possède la plus petite distance maximale entre deux descriptions du groupe à celui qui possède la plus grande distance maximale entre deux descriptions du groupe.

5. Procédé selon la revendication précédente, dans lequel le calcul de distance sur données symboliques comprend :

A1- le calcul d'une première distance entre au moins une variable quantitative de chaque description, et/ou
A2- le calcul d'une deuxième distance entre au moins une variable correspondant à des bornes d'intervalle de chaque description

6. Procédé selon la revendication précédente, dans lequel le calcul de distance sur données symboliques est effectué par une étape A2' d'addition de la première et de la deuxième distance.

7. Procédé selon la revendication 5, dans lequel l'étape de calcul de distance sur données symboliques comprend en outre :

A3- le calcul d'une troisième distance entre au moins une variable de type histogramme de chaque description, et/ou
A4- le calcul d'une quatrième distance entre au moins une variable qualitative de chaque description, ladite au moins une variable qualitative comprenant par exemple un type de modulation de fréquence.

8. Procédé selon la revendication 7, dans lequel le calcul de distance sur données symboliques est obtenu par une sous étape A4' d'addition de la première, de la deuxième, de la troisième et de la quatrième distance.

9. Procédé selon la revendication 7, dans lequel le calcul de distance sur données symboliques est obtenu par une sous étape A4' d'addition de la première, de la deuxième, de la troisième et de la quatrième distance, avec une pondération de chaque distance.

10. Procédé selon la revendication précédente, dans lequel les étapes B à D sont répétées une pluralité de fois en variant la valeur Q entre chaque itération jusqu'à trouver la valeur de Q qui minimise une moyenne des distances maximales entre deux descriptions d'un sous ensemble des groupes ou une médiane des distances maximales entre deux descriptions des groupes.

11. Procédé selon la revendication 9, dans lequel les étapes B à D sont répétées une pluralité de fois en variant la valeur $Q$ entre chaque itération jusqu'à trouver la valeur de $Q$ adaptée pour minimiser un nombre de groupes et une médiane des distances maximales entre deux descriptions des groupes.

12. Procédé selon l'une quelconque des revendication 7 à 11, dans lequel le calcul de la quatrième distance entre au moins une variable qualitative de chaque description, notées $x1$ et $x2$ est défini par l'équation suivante :

$$d(x1, x2) = \begin{cases} 0 \ si \ x1 \ est \ identique \ \text{à} \ x2 \\ n \ si \ x1 \ est \ différent \ de \ x2 \end{cases}$$

avec $n > 0$ un nombre entier adapté en fonction du poids relatif des variables qualitatives par rapport aux autres types de variable.

13. Procédé selon l'une quelconque des revendications 1 à 5, 7 ou 10 à 12 en combinaison avec la revendication 9, comprenant en outre les étapes suivantes :

F. répéter les étapes B à D un nombre $L \geq 2$ de fois en variant la valeur $Q$ et/ou en variant ladite pondération des distances entre chaque itération de manière à obtenir $L$ partitions de données différentes, et
G. appliquer un algorithme de clustering hiérarchique agglomératif à partir des $L$ partitions de données différentes afin de former une partition de données finale plus robuste au bruit.

14. Procédé selon la revendication précédente, dans lequel l'étape G comprend les sous étapes suivantes :

G-i - Former une matrice C de dimension $N \times N$ de coefficients $C_{ij}$ représentatif d'une distance de regroupement d'une des descriptions $D_i$ et d'une autre des descriptions $D_j$ dans *les L* partitions de données différentes,
G-ii - Appliquer ledit algorithme de *clustering* hiérarchique agglomératif sur les descriptions $D_1,...,D_N$ en fonction desdites distances de regroupement afin de créer une pluralité de partitions agglomérées correspondant chacune à une itération différente dudit algorithme
G-iii - Calculer une durée de vie de chacune des partitions agglomérées, ladite durée de vie d'une partition agglomérée donnée étant définie comme une différence entre :

une distance de regroupement maximale entre deux descriptions de ladite partition agglomérée donnée et
une distance de regroupement maximale entre deux descriptions d'une partition agglomérée obtenue par une itération supplémentaire dudit algorithme sur ladite partition agglomérée donnée

G-iv - Sélectionner la partition agglomérée présentant la durée de vie maximale, qui forme ladite partition de données finale plus robuste au bruit.

15. Procédé selon la revendication précédente, dans lequel $C_{ij} = 1 - \frac{m_{ij}}{L}$, où $m_{ij}$ est un nombre de fois où la description $D_i$ et la description $D_j$ sont regroupées dans un même groupe parmi les L partitions de données différentes.

**Patentansprüche**

1. Verfahren zum Bündeln von $N > 3$ Beschreibungen $D_1,...,D_N$ von Wellenformen, die in einer Datenbank umfasst sind, wobei das Verfahren die folgenden Schritte umfasst:

0. Auswählen der $N > 3$ Beschreibungen $D_1,...,D_N$ von Wellenformen, die in der Datenbank umfasst sind,
A. für jede Beschreibung $D_i$, $i \in [1; N]$ der Datenbank:

- Berechnen einer Distanz $\Delta_{ik}$ über symbolische Daten zwischen der Beschreibung $D_i$ und jeder der $k$ anderen Beschreibungen $D_k$, mit $k \in [1; N]$, $k \neq i$,

- Bestimmen der Beschreibung $D_j$, $i \neq j$, bei der die Distanz $\Delta_{ij}$ minimal ist, und Bilden eines Paares $D_{ij}$ ab den Beschreibungen $D_i$ und $D_j$,

B. oder $Q \in N > 2$, Bilden $Q$ - 1 Schwellen $S_1,...,S_{Q-1}$, sodass bei $p$ von 1 bis $Q$ - 1, das oder die $p/Q$-ten der Paare $D_{ij}$ jeweils eine Distanz $\Delta_{ij}$ kleiner als die Schwelle $S_p$, aufweisen

C. Bilden von $Q$ Anordnungen, $C_1,...,C_Q$, von Paaren $D_{ij}$ ab den $Q$-1 Schwellen $S_1,...,S_{Q-1}$

D. für $x$ von 1 bis $Q$ : Ausführen mindestens eines iterativen Fusionsschrittes, der die Beschreibungen der Paare $D_{ij}$, die in der Anordnung $C_x$ umfasst sind, in Gruppen $G_x$ in Abhängigkeit der Schwelle $S_x$, bündelt, wobei der mindestens eine iterative Fusionsschritt die Beschreibung oder Beschreibungen nicht bündelt, die einer Gruppe $G_y$ angehört/angehören, die aus den Anordnungen $C_y$ gebildet wird, wobei y < x, um Gruppen $G_a$ zu erhalten, die jeweils eine maximale Distanz $d_{max,x}$ zischen zwei Beschreibungen aufweisen, die von den anderen Gruppen $G_b$, $b \neq a$, verschieden sind, wobei eine von allen erhaltenen Gruppen gebildete Anordnung Datenpartition *genannt wird*

00. Aufweisen der Datenpartition, worin die $N > 3$ Beschreibungen $D_1,...,D_N$ gebündelt sind.

2. Verfahren nach dem vorstehenden Anspruch, wobei der Schritt D die folgenden Teilschritte umfasst:

D1- für $x$ von 1 bis $Q$ - 1, Ausführen des mindestens einen iterativen Fusionsschritts ab den Paaren $D_{ij}$, die in der Anordnung $C_x$ umfasst sind, solange eine maximale Distanz $d_{max,x}$ zwischen zwei Beschreibungen der Gruppen $G_x$, die in einem vorherigen iterativen Fusionsschritt ab den Paaren $D_{ij}$, die in der Anordnung $C_x$, umfasst sind, gebildet worden sind, kleiner als die $S_x$ ist,

D2- für $x = Q$, Ausführen des mindestens einen iterativen Fusionsschritts, sodass jede Gruppe $G_Q$, die durch den mindestens einen iterativen Fusionsschritt gebildet worden sind, die Beschreibungen der Paare $D_{ij}$ bündelt, die in der Anordnung $C_Q$ umfasst sind, die eine gemeinsame Beschreibung aufweisen.

3. Verfahren nach Anspruch 1 oder 2, wobei der Schritt C zum Bilden der $Q$ Anordnungen, $C_1,...,C_Q$, von Paaren $D_{ij}$ dergestalt ist, dass:

- die Anordnung $C_1$ das oder die Paare $D_{ij}$ umfasst, aufweisend eine Distanz $\Delta_{ij}$ kleiner als die Schwelle $S_1$
- bei $x$ von 2 bis $Q$ - 1, wobei die Anordnung $C_x$ das oder die Paare $D_{ij}$ umfasst, aufweisend jeweils eine Distanz $\Delta_{ij}$ kleiner als die Schwelle $S_x$, jedoch größer als oder gleich wie die Schwelle $S_{x-1}$
- die Anordnung $C_Q$ das oder die Paare $D_{ij}$ umfasst, aufweisend jeweils eine Distanz $\Delta_{ij}$ größer oder gleich der Schwelle $S_{Q-1}$

4. Verfahren nach einem der vorstehenden Ansprüche, umfassend einen späteren Schritt E, der darin besteht, die nach dem Schritt D erhaltenen Gruppen von jenem, der die kleinste maximale Distanz zwischen zwei Beschreibungen der Gruppe besitzt, bis zu jenem zu ordnen, der die größte maximale Distanz zwischen zwei Beschreibungen der Gruppe besitzt.

5. Verfahren nach dem vorstehenden Anspruch, wobei die Distanzberechnung über symbolische Daten umfasst:

A1- die Berechnung einer ersten Distanz zwischen mindestens einer quantitativen Variablen jeder Beschreibung, und/oder

A2- die Berechnung einer zweiten Distanz zwischen mindestens einer Variablen, die den Intervallgrenzen jeder Beschreibung entspricht

6. Verfahren nach dem vorstehenden Anspruch, wobei die Distanzberechnung über symbolische Daten durch einen Schritt A2' zum Addieren der ersten und der zweiten Distanz ausgeführt wird.

7. Verfahren nach Anspruch 5, wobei die Distanzberechnung über symbolische Daten weiter umfasst:

A3- die Berechnung einer dritten Distanz zwischen mindestens einer Variablen vom Typ Histogramm jeder Beschreibung, und/oder

A4- die Berechnung einer vierten Distanz zwischen mindestens einer qualitativen Variablen jeder Beschreibung, wobei die mindestens eine qualitative Variable beispielsweise einen Frequenzmodulationstyp umfasst.

8. Verfahren nach Anspruch 7, wobei die Distanzberechnung über symbolische Daten durch einen Teilschritt A4' zum Addieren der ersten, der zweiten, der dritten und der vierten Distanz erhalten wird.

9. Verfahren nach Anspruch 7, wobei die Distanzberechnung über symbolische Daten durch einen Teilschritt A4' zum Addieren der ersten, der zweiten, der dritten und der vierten Distanz mit einer Gewichtung jeder Distanz erhalten wird.

10. Verfahren nach dem vorstehenden Anspruch, wobei die Schritte B bis D eine Vielzahl von Malen unter Veränderung des Wertes Q zwischen jeder Iteration wiederholt werden, bis der Wert Q gefunden wird, der einen Mittelwert der maximalen Distanzen zwischen zwei Beschreibungen einer Unteranordnung der Gruppen oder einen Medianwert der maximalen Distanzen zwischen zwei Beschreibungen der Gruppen minimiert.

11. Verfahren nach Anspruch 9, wobei die Schritte B bis D eine Vielzahl von Malen unter Veränderung des Wertes $Q$ zwischen jeder Iteration wiederholt werden, bis der Wert $Q$ gefunden wird, der angepasst ist, um eine Anzahl an Gruppen und einen Medianwert der maximalen Distanzen zwischen zwei Beschreibungen der Gruppen zu minimieren.

12. Verfahren nach einem der Ansprüche 7 bis 11, wobei die Berechnung der vierten Distanz zwischen mindestens einer qualitativen Variablen jeder Beschreibung, als x1 und x2 verzeichnet, durch die folgende Gleichung definiert wird:

$$d(x1, x2) = \begin{cases} 0, wenn\ x1\ gleich\ x2\ ist \\ n, wenn\ x1\ von\ x2\ verschieden\ ist \end{cases}$$

wobei n > 0 eine ganze Zahl ist, die in Abhängigkeit vom relativen Gewicht der qualitativen Variablen in Bezug auf andere Variablentypen angepasst wird.

13. Verfahren nach einem der Ansprüche 1 bis 5, 7 oder 10 bis 12 in Kombination mit Anspruch 9, weiter umfassend die folgenden Schritte:

F. Wiederholen der Schritte B bis D eine Anzahl $L \geq 2$ an Malen unter Veränderung des Wertes $Q$ und/oder unter Veränderung der Gewichtung der Distanzen zwischen jeder Iteration, um $L$ verschiedene Datenpartitionen zu erhalten, und
G. Anwenden eines hierarchisch-agglomerativen Cluster-Algorithmus aus den L verschiedenen Datenpartitionen, um eine endgültige rauschbeständigere Datenpartition zu bilden.

14. Verfahren nach dem vorstehenden Anspruch, wobei der Schritt G die folgenden Teilschritte umfasst:

G-i - Bilden einer Dimensionsmatrix $C\ N \times N\ mit$ Koeffizienten $C_{ij}$, , repräsentativ für eine Bündelungsdistanz einer der Beschreibungen $D_i$ und einer anderen der Beschreibungen $D_j$ in den $L$ verschiedenen Datenpartitionen,
G-ii - Anwenden des hierarchisch-agglomerativen Cluster-Algorithmus auf die Beschreibungen $D_1,...,D_N$ in Abhängigkeit von den Bündelungsdistanzen, auf eine Vielzahl von agglomerierten Partitionen zu schaffen, die jeweils einer verschiedenen Iteration des Algorithmus entsprechen
G-iii - Berechnen einer Lebensdauer jeder der agglomerierten Partitionen, wobei die Lebensdauer einer gegebenen agglomerierten Partition als eine Differenz definiert ist, zwischen:

einer maximalen Bündelungsdistanz zwischen zwei Beschreibungen der gegebenen agglomerierten Partition und
einer maximalen Bündelungsdistanz zwischen zwei Beschreibungen einer durch eine zusätzliche Iteration des Algorithmus auf die gegebene agglomerierte Partition erhaltenen agglomerierten Partition

G-iv - Auswählen der agglomerierten Partition, die die maximale Lebensdauer aufweist, die die endgültige rauschbeständigere Datenpartition bildet.

15. Verfahren nach dem vorstehenden Anspruch, wobei $C_{ij} = 1 - \frac{m_{ij}}{L}$, wobei $m_{ij}$ eine Anzahl an Malen ist, wobei die Beschreibung $D_i$ und die Beschreibung $D_j$ in einer gleichen Gruppe unter den L verschiedenen Datenpartitionen gebündelt werden.

**Claims**

1. Method for clustering $N > 3$ waveform descriptions $D_1,...,D_N$ comprised in a database, said method comprising the following steps:

   0. selecting the $N > 3$ waveform descriptions $D_1,...,D_N$ comprised in the database,
   A. for each description $D_i$, $i \in [1; N]$ of the database:

      - calculating a distance $\Delta_{ik}$ over symbolic data between said description $D_i$ and each of the $k$ other descriptions $D_k$, with $k \in [1; N]$, $k \neq i$,
      - determining the description $D_j$, $i \neq j$, for which the distance $\Delta_{ij}$ is minimal, and forming a pair $D_{ij}$ from the descriptions $D_i$ and $D_j$,

      B. that is $Q \in \mathbb{N} > 2$, forming $Q - 1$ thresholds $S_{1,...,}S_{Q-1}$ such that, for $p$ going from 1 to $Q - 1$, the $p/Q$-th(s) of the pairs $D_{ij}$ each have a distance $\Delta_{ij}$ less than the threshold $S_p$,
      C. forming $Q$ sets, $C_1,...,C_Q$, of pairs $D_{ij}$ from the $Q-1$ thresholds $S_1,...,S_{Q-1}$
      D. for $x$ going from 1 to $Q$: carrying out at least one iterative fusion step clustering the descriptions of the pairs $D_{ij}$ comprised in the set $C_x$ into groups $G_x$ as a function of said threshold $S_x$, said at least one iterative fusion step not clustering the description(s) belonging to a group $G_y$ formed from the sets $C_y$ with y<x, so as to obtain groups $G_\alpha$ each having a maximum distance $d_{max,x}$ between two descriptions which are different from those of the other groups $G_b, b \neq a$, a set formed by all the groups obtained being called data partition
      00. having said data partition in which the $N > 3$ descriptions $D_1,...,D_N$ are clustered.

2. Method according to the preceding claim, wherein the step D comprises all the following substeps:

   D1- for x going from 1 to $Q - 1$, carrying out said at least one iterative fusion step from said pairs $D_{ij}$ comprised in the set $C_x$ while a maximum distance $d_{max,x}$ between two descriptions of the groups $G_x$, formed in a preceding iterative fusion step from said pairs $D_{ij}$ comprised in the set $C_x$, is less than the threshold $S_x$,
   D2- for $x = Q$, carrying out said at least one iterative fusion step, such that each group $G_Q$ formed by said at least one iterative fusion step clusters the descriptions of the pairs $D_{ij}$ comprised in the set $C_Q$ which have a description in common.

3. Method according to claim 1 or 2, wherein the step C of forming the Q sets, $C_1,...,C_Q$, of pairs $D_{ij}$ is such that:

   - said set $C_1$ comprises the pair(s) $D_{ij}$ having a distance $\Delta_{ij}$ less than the threshold $S_1$
   - for $x$ going from 2 to $Q - 1$, said set $C_x$ comprises the pair(s) $D_{ij}$ each having a distance $\Delta_{ij}$ less than the threshold $S_x$, but greater than or equal to the threshold $S_{x-1}$
   - said set $C_Q$ comprises the pair(s) $D_{ij}$ having a distance $\Delta_{ij}$ greater than or equal to the threshold $S_{Q-1}$.

4. Method according to any one of the preceding claims, comprising a subsequent step E consisting of ordering the groups obtained following the step D of that which has the smallest maximum distance between two descriptions of the group, to that which has the greatest maximum distance between two descriptions of the group.

5. Method according to the preceding claim, wherein calculating the distance over symbolic data comprises:

   A1- calculating a first distance between at least one quantitative variable of each description, and/or
   A2- calculating a second distance between at least one variable corresponding to interval limits of each description.

6. Method according to the preceding claim, wherein calculating the distance over symbolic data is done by a step A2' of adding the first and the second distance.

7. Method according to claim 5, wherein the step of calculating the distance over symbolic data further comprises:

   A3- calculating a third distance between at least one histogram-type variable of each description, and/or
   A4- calculating a fourth distance between at least one qualitative variable of each description, said at least one qualitative variable comprising, for example, a type of frequency modulation.

8. Method according to claim 7, wherein calculating the distance over symbolic data is obtained by a substep A4' of adding the first, the second, the third and the fourth distance.

9. Method according to claim 7, wherein calculating the distance over symbolic data is obtained by a substep A4' of adding the first, the second, the third and the fourth distance, with a weighting of each distance.

10. Method according to the preceding claim, wherein the steps B to D are repeated a plurality of times by varying the value Q between each iteration, until finding the value of Q which minimises a mean of the maximum distances between two descriptions of a subset of the groups or a median of the maximum distances between two descriptions of the groups.

11. Method according to claim 9, wherein the steps B to D are repeated a plurality of times by varying the value Q between each iteration, until finding the value of Q, adapted to minimise a number of groups and a median of the maximum distances between two descriptions of the groups.

12. Method according to any one of claims 7 to 11, wherein calculating the fourth distance between at least one qualitative variable of each description, referenced x1 and x2 is defined by the following equation:

$$d(x1, x2) = \begin{cases} 0 \text{ if } x1 \text{ is identical to } x2 \\ n \text{ if } x1 \text{ is different from } x2 \end{cases}$$

with n > 0 an integer adapted as a function of the relative weight of the qualitative variables with respect to the other types of variable.

13. Method according to any one of claims 1 to 5, 7 or 10 to 12 combined with claim 9, further comprising the following steps:

F. repeating the steps B to D a number $L \geq 2$ of times by varying the value $Q$ and/or by varying said weighting of the distances between each iteration, so as to obtain $L$ different data partitions, and
G. applying an agglomerative hierarchical clustering algorithm from the $L$ different data partitions, in order to form a final data partition more robust to noise.

14. Method according to the preceding claim, wherein the step G comprises the following substeps:

G-i - Forming a matrix C of dimension $N \times N$ of coefficients $C_{ij}$, representative of a clustering distance of one of the descriptions $D_i$ and of another of the descriptions $D_j$ in the L different data partitions,
G-ii - Applying said agglomerative hierarchical *clustering* algorithm to the descriptions $D_{1,...,}D_N$ as a function of said clustering distances, in order to create a plurality of agglomerated partitions, each corresponding to a different iteration of said algorithm
G-iii - Calculating a lifespan of each of the agglomerated partitions, said lifespan of a given agglomerated partition being defined as a difference between:

a maximum clustering distance between two descriptions of said given agglomerated partition, and
a maximum clustering distance between two descriptions of an agglomerated partition obtained by an additional iteration of said algorithm on said given agglomerated partition

G-iv - Selecting the agglomerated partition having the maximum lifespan, which forms said final data partition more robust to noise.

15. Method according to the preceding claim, wherein $C_{ij} = 1 - \frac{m_{ij}}{L}$, where $m_{ij}$ is a number of times where the description $D_i$ and the description $D_j$ are clustered in one same group from among the L different data partitions.

Figure 1

$D_1, \ldots, D_N$ descriptions de formes d'ondes

$\downarrow$ pour $i = 1 \ldots N$

A
-Calculer distance $\Delta_{ik}$ entre les descriptions
-Déterminer distance minimale $\Delta_{ij}$ pour la paire $D_{ij}$ avec $i \neq j$

$\downarrow$ soit $Q \in \mathbb{N} > 2$

B
Former seuils $S_1, \ldots, S_{Q-1}$ à partir des distances $\Delta_{ij}$ et des paires $D_{ij}$

C
Former les ensembles $C_1, \ldots, C_Q$ de paires $D_{ij}$ à partir des seuils $S_1, \ldots, S_{Q-1}$

$\downarrow$ pour $x = 1 \ldots Q$

D
Fusion itérative à partir des paires $D_{ij}$ de manière à former des groupes $G_x$

# Fig.1

Figure 2A

Fig.2A

Figure 2B

Fig.2B

Figure 3

$D_1, \ldots, D_N$ descriptions de formes d'ondes

↓ pour $i = 1 \ldots N$

**A**
- Calculer distance $\Delta_{ik}$ entre les descriptions
- Déterminer distance minimale $\Delta_{ij}$ pour la paire $D_{ij}$

↓ soit $Q \in \mathbb{N} > 2$

**B**
Former seuils $S_1, \ldots, S_{Q-1}$ à partir des distances $\Delta_{ij}$ et des paires $D_{ij}$

**C**
Former les ensembles $C_1, \ldots, C_Q$ de paires $D_{ij}$ à partir des seuils $S_1, \ldots, S_{Q-1}$

↓ pour $x = 1 \ldots Q$

**D**
Fusion itérative à partir des paires $D_{ij}$ de manière à former des groupes $G_x$

**E**
Classer les groupes par distance maximale entre deux membres du groupe croissante

$G_1$
$G_2$
⋮
Clusters avec données quasiment identiques

$G_p$
$G_{p+1}$
⋮
Clusters avec données très proches

$G_Z$
Clusters avec données semblables

Fig.3

Figure 4

A

D

Classer les groupes par distance maximale entre deux membres du groupe croissante

E

Répéter $L \geq 2$ fois les étapes B à D en variant $Q$ et/ou en variant la pondération des distances en étape A de manière à obtenir $L$ partitions différentes

F

appliquer algorithme de clustering hiérarchique agglomératif sur $L$

G

Fig.4

Figure 5A

Groupe 1      Groupe 2

Partition 1

Groupe 1      Groupe 2

Partition 3

Groupe 1   Groupe 2   Groupe 3

Partition 2

Groupe 1    Groupe 2

Partition 4

# Fig.5A

Figure 5B

Partition 1

Partition 2

Partition 3

Partition 4

$$C_{ij} = 1 - \frac{m_{ij}}{L}$$

Avec $m_{ij}$ le nombre de fois
que la donnée $D_i$ et la donnée $D_j$
sont dans le même groupe
et $L$ le nombre de partitions

**Matrice C**

|   | A | B | C | D | E | F |
|---|---|---|---|---|---|---|
| A | X | 0.75 | 0 | 1 | 0.75 | 1 |
| B |   | X | 0.75 | 0.25 | 0,75 | 0.50 |
| C |   |   | X | 1 | 0.75 | 1 |
| D |   |   |   | X | 0.50 | 0.25 |
| E |   |   |   |   | X | 0.25 |
| F |   |   |   |   |   | X |

# Fig.5B

Figure 5C

**Partitions agglomérées**

## Fig.5C

Figure 5D

## Fig.5D

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. MATUSZEWSKI**. Application of Clustering Methods in Radar Signals Recognition. *2018 International Scientific-Practical Conference Problems of Infocommunications. Science and Technology (PIC S&T)*, 2018, 745-751